# EUROPEAN PATENT APPLICATION

(11) **EP 4 737 774 A1**
(43) Date of publication of application: **06.05.2026**
(21) Application number: 25196543.0
(22) Date of filing: 18.08.2025
(51) Int. Cl.: F16K 5/06, F16K 31/60, F16K 35/02

(54) **VALVE APPARATUS**

(30) Priority: 29.10.2024 GB 202415897
(71) Applicant: Airbus Operations Limited, Bristol BS34 7PA (GB)
(72) Inventor: Elms, Martin, Filton BS34 7PA (GB); Khakhar, Satish, Filton BS34 7PA (GB)
(74) Representative: Harvey, Alexander James

(57) **Abstract**

The present invention relates to a valve apparatus for a fluid delivery system comprising a valve housing having a fluid flow path, a valve member, a valve actuator operably connected to the valve member and configured to move the valve member between first and second positions, and a thermally-activated locking mechanism which provides the valve apparatus with an additional passive safety feature which will automatically lock and inhibit movement of the valve member upon reaching a pre-determined activation temperature.

## Description

### FIELD OF THE INVENTION

The present invention relates to a valve apparatus for a fluid delivery system, an aircraft fuel delivery system comprising said valve apparatus, and to an aircraft comprising said aircraft fuel delivery system.

### BACKGROUND OF THE INVENTION

Cryogenic fuels such a liquified hydrogen and liquified natural gas are a promising technology for improving efficiency and sustainability in various applications, such as aerospace, transportation, and power generation.

Notably, cryogenic fuels have a very high energy density, which means they can provide more power per unit of mass, as well as a low carbon content, which means they produce less greenhouse gas when burned. Cryogenic fuels can also be produced from renewable sources, such as water or biomass, and therefore the use of such fuels reduces dependence on fossil fuels.

However, one of the drawbacks associated with cryogenic fuels is that in order to maximize their volumetric energy density, they must be stored in liquid form. In order to do this, cryogenic fuels must be kept at extremely low temperatures (e.g., between - 150°c and -255°c).

As such, the use of cryogenic fuels introduces a new safety factor (when compared to more conventional fuels) which must be accounted for to prevent maintenance personnel from coming into unwanted physical contact with such cryogenic fuels during routine maintenance operations.

It is an aim of the present invention to provide a solution to this issue.

### SUMMARY OF THE INVENTION

A first aspect of the invention provides a valve apparatus for a fluid delivery system comprising:
a valve housing having an inlet and an outlet which together form a fluid flow path across the valve housing;
a valve member configured to move between a first position in which fluid is able to flow along the fluid flow path, and a second position in which the flow of fluid along the fluid flow path is restricted;
a valve actuator operably connected to the valve member, said valve actuator being configured to move the valve member between the first and second positions; and
a thermally-activated locking mechanism in thermal communication with the inlet and configured to inhibit movement of the valve member upon reaching a temperature above or below a pre-determined activation temperature.

Advantageously, the provision of a thermally-activated locking mechanism which is configured to inhibit movement of the valve member upon reaching a pre-determined activation temperature provides the valve apparatus with an additional passive safety feature which will automatically lock the valve member (without user input) when the pre-determined activation temperature has been reached.

This helps to prevent the inadvertent release of potentially hazardous fluids (e.g., cryogenic aircraft fuel) due to inadvertent actuation of the valve member during routine maintenance operations.

It shall also be appreciated that since the thermally-activated locking mechanism does not feature any complex electrical systems, it does not significantly impact the cost, reliability and/or maintenance burden of the valve.

In exemplary embodiments, the valve apparatus may be a shut-off valve.

In exemplary embodiments, the thermally-activated locking mechanism may be configured to inhibit movement of the valve member upon reaching a temperature below the pre-determined activation temperature.

Advantageously, the provision of a thermally-activated locking mechanism which is configured to inhibit movement of the valve member upon reaching a temperature below the pre-determined activation temperature enables the locking mechanism to operate effectively when used with cryogenic fluids (such as cryogenic aircraft fuel).

In exemplary embodiments, the thermally-activated locking mechanism may be configured to inhibit movement of the valve member upon reaching a temperature below -60°c.

In exemplary embodiments, the thermally-activated locking mechanism may be configured to inhibit movement of the valve member upon reaching a temperature below -80°c.

In exemplary embodiments, the thermally-activated locking mechanism may be configured to inhibit movement of the valve member upon reaching a temperature below -100°c.

In exemplary embodiments, the valve apparatus may further comprise at least one groove formed in the valve member or formed in a drive shaft connected to said valve member.

In exemplary embodiments, the thermally-activated locking mechanism may further comprise:
a locking pin configured to move between a first (e.g., extended) position in which the locking pin engages with the at least one groove formed in the valve member or formed in a drive shaft connected to said valve member, and a second (e.g., retracted) position in which the locking pin does not engage with the at least one groove; and
a thermally-activated actuator configured to move the locking pin into the first (e.g., extended) position upon reaching a temperature above or below the pre-determined activation temperature.

In exemplary embodiments, the thermally-activated actuator may be configured to move the locking pin into the first (e.g., extended) position upon reaching a temperature below the pre-determined activation temperature.

The provision of a thermally-activated actuator which is configured to move the locking pin into the first (e.g., extended) position upon reaching a temperature below the pre-determined activation temperature enables the locking mechanism to operate effectively when used with cryogenic fluids (such as cryogenic aircraft fuel).

In exemplary embodiments, the thermally-activated actuator may be configured to move the locking pin into the first (e.g., extended) position upon reaching a temperature below -60°c.

In exemplary embodiments, the thermally-activated actuator may be configured to move the locking pin into the first (e.g., extended) position upon reaching a temperature below -80°c.

In exemplary embodiments, the thermally-activated actuator may be configured to move the locking pin into the first (e.g., extended) position upon reaching a temperature below -100°c.

In exemplary embodiments, the thermally-activated actuator may comprise a shape-memory alloy.

Advantageously, the use of a thermally-activated actuator comprising a shape-memory alloy allows the actuator to extend and retract at two independent temperature points. For examples, shape-memory alloys can be designed so as to extend (or lock) at a first temperature and to retract (or unlock) at a second temperature.

This feature can be used to help better ensure that the thermally-activated locking mechanism will only retract (or unlock) at temperatures well above or below the pre-determined activation temperature when a user can be sure that there are no potentially hazardous fluids present within the valve inlet.

In exemplary embodiments, the thermally-activated actuator may comprise a bi-metallic strip comprising at least two materials having different coefficients of thermal expansion.

Advantageously, the use of a thermally-activated actuator comprising a bi-metallic strip allows the actuator to extend and retract upon reaching a single defined temperature point, thereby improving the responsiveness of the locking mechanism to temperature changes.

In exemplary embodiments, the valve apparatus may comprise a pair of grooves formed in the valve member.

In exemplary embodiments, the valve apparatus may comprise a pair of grooves formed in a drive shaft connected to said valve member.

In exemplary embodiments, the first of said grooves may be positioned so as to align with the locking pin when the valve member is in the first position, and the second of said grooves may be positioned so as to align with the locking pin when the valve member is in the second position.

This provides the valve apparatus with the capability to have the locking pin lock the valve member in either the open or closed position.

In exemplary embodiments, the pair of grooves may be spaced apart by an angle of approximately 90 degrees about a rotational axis of the valve member.

In exemplary embodiments, the valve apparatus may further comprise a biasing member configured to bias the locking pin into the first (e.g., extended) position.

In exemplary embodiments, the biasing member may be a coil spring.

Advantageously, the provision of such a biasing member helps to ensure that, as a default, the locking pin remains engaged with the at least one groove thereby inhibiting movement of the valve member.

In exemplary embodiments, the valve apparatus may further comprise a manually-operated release mechanism for moving the locking pin from the first (e.g., extended) position to the second (e.g., retracted) position.

In exemplary embodiments, the manually-operated release mechanism may be a pull handle.

Advantageously, the provision of such a release mechanism allows the user to mechanically override and release the locking pin as may be required in scenarios in which rapid actuation of the valve member is required.

Furthermore, since the release mechanism can only be released by a conscious and deliberate action by the user, and since a further action must also be subsequently performed (following release of the locking pin) in order to actuate the valve member, the likelihood of the valve member being accidentally actuated during routine maintenance operations is extremely low.

In exemplary embodiments, the valve apparatus may further comprise a heat transfer conduit having a first end in thermal communication with the inlet and a second end in thermal communication with the thermally-activated locking mechanism.

Advantageously, the provision of such a heat transfer conduit enables heat to be more readily transferred from the fluid flow path to the thermally-activated actuator thereby improving the responsiveness of the locking mechanism. It shall also be appreciated that the aforementioned benefit can be achieved in valves utilising non-thermally conductive valve members which is beneficial for preventing the ingress of heat into the fluid delivery system.

In exemplary embodiments, the valve actuator may be a manually-operated valve actuator.

In other embodiments, the valve actuator may be an electrical actuator.

In exemplary embodiments, the thermally-activated locking mechanism may be configured to inhibit movement of the valve member upon reaching a temperature above the pre-determined activation temperature.

In exemplary embodiments, the thermally-activated locking mechanism may be configured to inhibit movement of the valve member upon reaching a temperature above 100°c.

A further aspect of the invention provides an aircraft fuel delivery system comprising:
a fuel tank for storing cryogenic fuel;
at least one fluid conduit for transferring cryogenic fuel from the fuel tank to one or more aircraft engines; and
at least one valve apparatus according to the previous aspect of the invention, wherein the valve member of said valve apparatus is positioned along the at least one fluid conduit.

In exemplary embodiments, the aircraft fuel delivery system may further comprise a pump for transferring cryogenic fuel from the fuel tank to the one or more aircraft engines.

In exemplary embodiment, the valve member of the at least one valve apparatus may be positioned along the at least one fluid conduit between the fuel tank and the pump.

In other embodiments, the fuel tank may be pressurised.

Advantageously, the use of a pressurised fuel supply allows cryogenic fuel to be delivered from the fuel tank to the one or more aircraft engines without requiring the use of a pump.

A further aspect of the invention provides an aircraft comprising the aircraft fuel delivery system of the previous aspect of the invention.

The term "cryogenic fuel" is defined herein to mean a combustible fluid having a boiling point which is less than -150°c. Examples of cryogenic fuels include, but are not limited to, liquid hydrogen, liquid natural gas and liquid methane.

The term "fluid" is defined herein to encompass both liquids and gases.

The term "manually-operated" is defined herein to mean that the component is independent of electronic actuation or control.

### BRIEF DESCRIPTION OF THE DRAWINGS

Embodiments of the invention will now be described with reference to the accompanying drawings, in which:
Figure 1 is a schematic front view of an aircraft according to an embodiment of the present invention;
Figure 2 is a schematic plan view of the aircraft illustrated in Figure 1;
Figure 3 is a schematic diagram of an aircraft fuel delivery system according to an embodiment of the present invention;
Figure 4A is a schematic cross-sectional view of a valve apparatus according to an embodiment of the present invention;
Figure 4B is a schematic plan view of a drive shaft of the valve apparatus illustrated in Figure 4A;
Figure 5 is a schematic plan view of the valve apparatus illustrated in Figures 4A and 4B in which the thermally activated locking mechanism is visible;
Figure 6A is an isolated view of the thermally activated locking mechanism illustrated in Figure 5 in which the locking pin is in an extended position; and
Figure 6B is an isolated view of the thermally activated locking mechanism illustrated in Figure 5 in which the locking pin is in a retracted position.

### DETAILED DESCRIPTION OF EMBODIMENT(S)

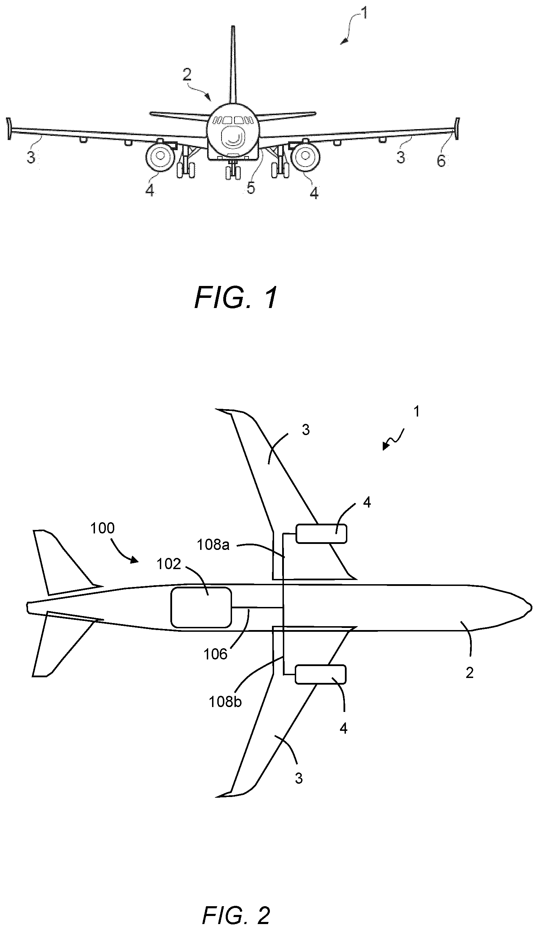

Figure 1 shows an aircraft 1 according to an embodiment of the present invention.

In the embodiment illustrated in Figure 1, the aircraft 1 is a typical jet passenger transport aircraft but the invention is applicable to a wide variety of fixed wing aircraft types, including commercial, military, passenger, cargo, jet, propeller, general aviation, etc.

The aircraft 1 has a fuselage 2 and two wings 3 extending from either side of the fuselage 2. Each wing 3 extends in a spanwise direction from a wing root 5 where the wing meets the fuselage 2 to a wing tip 6.

In the embodiment illustrated in Figure 1, each wing 3 is a dihedral wing, so the wings 3 are angled upwardly as they extends towards the wing tip 6. However, it shall be appreciated that the present invention may also be used in aircraft having anhedral wings or any other suitable wing design.

Engines 4 are located on the underside of each wing 3. Figure 1 shows a single engine 4 on each wing, however the number and location of the engines may vary depending on the type of aircraft.

Endeavours to increase aircraft efficiency mean that improvements to existing aircraft are continuously being made, with one such solution being the use of cryogenic fuels such as liquid hydrogen.

Hydrogen may be utilised as an aviation fuel in a number of ways, such as hydrogen direct burn (e.g. a modified gas turbine engine may provide power by burning hydrogen in the turbojet combustion chambers) or converting the hydrogen to electricity by using fuel cell technology in which an electrochemical cell converts the chemical energy of the hydrogen fuel and an oxidising agent (e.g. oxygen) into electricity through redox reactions.

It shall be appreciated that in the illustrated embodiment, the engines 4 of the aircraft 1 are modified gas turbine engines which are configured to provide power by burning cryogenic fuel in the turbojet combustion chambers of each engine 4.

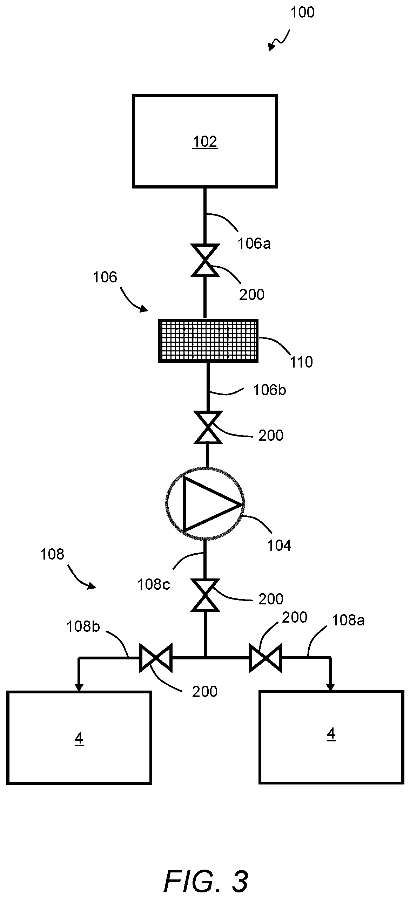

Referring now to Figures 2 and 3, the aircraft 1 also includes a fuel delivery system 100 for supplying cryogenic fuel to one or more of the aircraft engines 4.

The fuel delivery system 100 includes at least one fuel tank 102 for storing cryogenic fuel and at least one fluid conduit 106, 108 for transferring cryogenic fuel from the at least one fuel tank 102 to one or more of the aircraft engines 4.

In the embodiment illustrated in Figure 2, the fuel delivery system 100 comprises a single fuel tank 102 which is located in the aircraft fuselage 2. However, it shall be appreciated that in other embodiments, a different number of fuel tanks 102 may be provided. It shall also be appreciated that in alternative embodiments, the one or more fuel tank(s) 102 may be located in other suitable locations on the aircraft 1, such as in separate tanks below the wings 3 (e.g. in fuel pods).

The fuel tank(s) 102 are typically held at an internal pressure (e.g., between 350 kPa and 700 kPa) to better maximize the volumetric energy density of the cyrogenic fuel stored therein.

Referring now to Figure 3, in the illustrated embodiment the fuel delivery system 100 comprises a first conduit 106, a second conduit 108 and a pump 104 for transferring cryogenic fuel from the fuel tank 102 to one or more of the aircraft engines 4.

As shown in Figure 3, the first conduit 106 has a first conduit portion 106a in fluid communication with the fuel tank 102a and a second conduit portion 106b in fluid communication with an inlet of the pump 104.

Meanwhile, the second conduit 108 has a third conduit portion 108a in fluid communication with the starboard engine 4 of the aircraft 1, a fourth conduit portion 108b in fluid communication with the port engine 4 of the aircraft 1, and a fifth conduit portion 108c which connects the third 108a and fourth 108b conduit portions to an outlet of the pump 104.

However, in alternative embodiments, cryogenic fuel may be transferred from the fuel tank(s) 102 to the engines 4 using the internal pressure of the fuel tank(s) 102 and hence, in some embodiments, the pump 104 may be omitted. It shall also be appreciated that in such embodiments, only a single conduit may be required.

The fuel delivery system 100 may also include a fuel strainer 110 (or "gascolator") for removing small particles of sediment from the cryogenic fuel passing through the first 106 and/or second 108 conduits.

In the illustrated embodiment, the fuel strainer 110 is located along the first conduit 106 upstream of the pump 104. However, in alternative embodiments, the fuel strainer 110 may instead be located along the second conduit 108 downstream of the pump 104 or may even be omitted in some embodiments.

The fuel delivery system 100 also includes one or more shut-off valves 200 for isolating portions of the fuel delivery system 100 during routine maintenance, such as replacement of the pump 104 and/or fuel strainer 110.

In the illustrated embodiment, the fuel delivery system 100 comprises five shut-off valves which are positioned along the first 106a, second 106a, third 108a, fourth 108b and fifth 108c conduit portions respectively. However, it shall be appreciated that in other embodiments, a different number of shut-off valves may be provided.

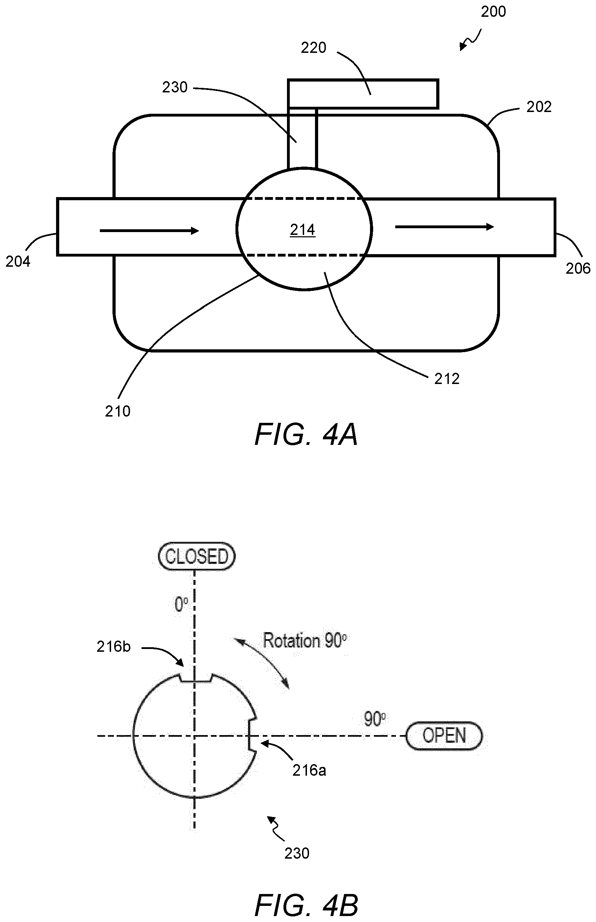

Figure 4A shows a valve apparatus according to an embodiment of the present invention which is suitable for use as a shut-off valve within an aircraft fuel delivery system 100 such as that which is depicted in Figure 3.

As shown in Figure 4A, the valve apparatus 200 comprises a valve housing 202 having an inlet 204, an outlet 206 and an internal chamber (not shown), which together form a fluid flow path across the valve housing 202.

A valve member 210 is housed within the internal chamber of the valve housing 202 such that the valve member 210 is positioned in the fluid flow path.

In the illustrated embodiment, the valve apparatus 200 is a ball valve and hence the valve member 210 has a substantially spherical body portion 212 having a channel 214 extending therethrough. Optionally, the internal chamber (not shown) may further comprise a seal around the valve member 210 to prevent the ingress of fluid into the internal chamber.

The channel 214 provided in the body portion 212 of the valve member 210 is arranged so as to align with the inlet 204 and the outlet 206 of the valve housing 202 when the valve member 210 is in a first, open, position to allow fluid (e.g., cryogenic fuel) to flow along the fluid flow path, and is arranged so as to extend perpendicular to the inlet 204 and the outlet 206 of the valve housing 202 when the valve member 210 is in a second, closed, position, to restrict the flow of fluid (e.g., cryogenic fuel) along the fluid flow path as shall be described in greater detail below.

It shall be appreciated that in the illustrated embodiment the flow of fluid along the fluid flow path is fully restricted such that no fluid can pass across the valve housing 202 when the valve member 210 is in the second, closed, position.

The internal chamber (not shown) has a shape corresponding to that of the valve member 210, with the diameter of the internal chamber being slightly larger than that of the valve member 210 so as to allow the valve member 210 to freely rotate within the internal chamber.

The valve member 210 is operably connected to a valve actuator 220 via a drive shaft 230 which extends from the valve member 210 and passes through the valve housing 202.

In the illustrated embodiment, the valve actuator 220 is a manually-operated valve actuator (e.g., a turn handle). However, it shall be appreciated that in alternative embodiments, the valve actuator 220 may be an electrical actuator.

In the illustrated embodiment, the drive shaft 230 is integrally formed with the valve member 210. However, in an alternative embodiment, the drive shaft 230 may be connected to the valve member 210 using any suitable method of joining or linkage.

As shown in Figure 4A, the actuator 220 is disposed external to the valve housing 202 and is configured to apply an actuating force to the drive shaft 230 which in turn transfers the actuating force to the valve member 210 causing the valve member 210 to rotate.

As mentioned above, the actuator 220 is operable to move the valve member 210 between the first, open, position in which fluid is able to freely flow along the fluid flow path and the second, closed, position in which the fluid flow path is blocked by the valve member body 212 such that fluid is not able to flow along the fluid flow path.

As shown in Figure 4B, in the illustrated embodiment, the first (open) and second (closed) positions are spaced apart by an angle of approximately 90 degrees about a rotational axis of the valve member 210. However, it shall be appreciated that the angle by which the first and second positions are spaced may differ in alternative embodiments.

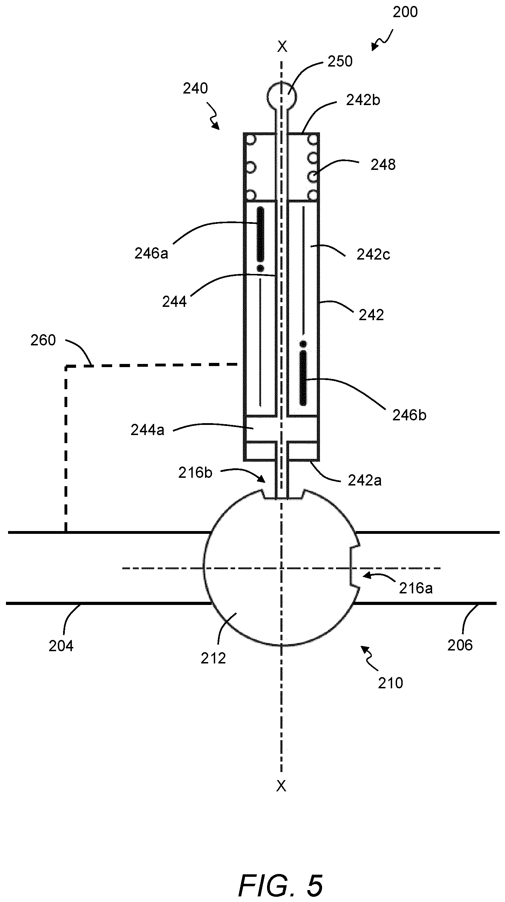

Referring now to Figure 5, the valve apparatus 200 further comprises a thermally-activated locking mechanism 240 which is configured to inhibit movement of the valve member 210 upon reaching a pre-determined activation temperature.

In the illustrated embodiment, since the valve apparatus 200 is employed as a shut-off valve for a cyrogenic fuel delivery system 100, the thermally-activated locking mechanism 240 is configured to inhibit movement of the valve member 210 upon reaching a temperature below the pre-determined activation temperature (e.g., below - 60°c).

However, it shall be appreciated that in other embodiments, the thermally-activated locking mechanism 240 may be configured to inhibit movement of the valve member 210 upon reaching a temperature below a different pre-determined activation temperature (e.g., below -80°c or below -100°c).

It shall also be appreciated that in embodiments in which the valve apparatus 200 is used within systems handling very hot fluids, the thermally-activated locking mechanism 240 may alternatively be configured to inhibit movement of the valve member 210 upon reaching a temperature above the pre-determined activation temperature (e.g., above 100°c).

As shown in Figure 5, the thermally activated locking mechanism 240 comprises a housing 242 having a first end portion 242a located proximate to the valve member 210, a second end portion 242b opposite said first end portion 242a, and an internal cavity 242c defined between the respective first 242a and second 242b end portions.

A locking pin 244 is housed partially within the internal cavity 242c and is movable between a first (extended) position and a second (retracted) position via a thermally-activated actuator 246 and also via a manually-operated release mechanism 250 (as shall be described in greater detail later within this application).

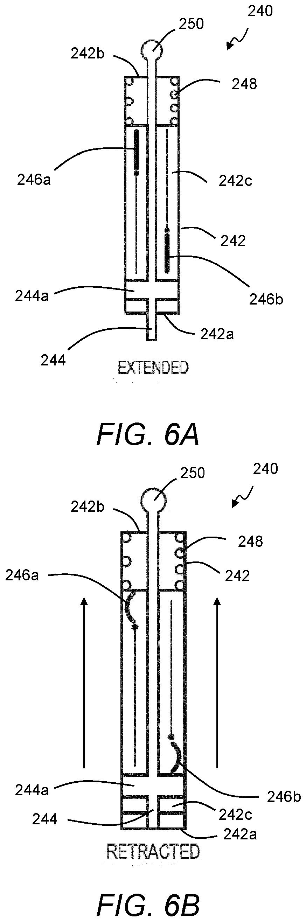

As shown in Figures 5 and 6A, when the locking pin 244 is in the first (extended) position, a portion of the locking pin 244 protrudes out of the housing 242 via an aperture (not shown) provided in the first end portion 242a of the housing 242 and engages with a corresponding groove 216a,b provided in the drive shaft 230, thereby inhibiting movement of said drive shaft 230 and hence also inhibiting movement of the valve member 210 connected thereto.

As shown in Figure 4B, in the illustrated embodiment the drive shaft 230 comprises a pair of grooves 216a,b which may be engaged by the locking pin 244.

The first of said grooves 216a is positioned about the drive shaft 230 such that it aligns with the locking pin 244 when the valve member 210 is in the first (open) position and the second of said grooves 216b is spaced apart from the first groove 216a by an angle of approximately 90 degrees about the rotational axis of the valve member 210 such that it aligns with the locking pin 244 when the valve member 210 is in the second (closed) position.

However, it shall be appreciated that in some alternative embodiments, a single groove may be provided in the draft shaft 230 at a position which aligns with locking pin 244 when the valve member 210 is in the second (closed) position only.

It shall also be appreciated that in some embodiments, the first and/or second grooves 216a,b may alternatively be provided in the body 212 of the valve member 210 rather than in the drive shaft 230.

Referring back to Figure 5, the thermally-activated actuator 246 is housed within the internal cavity 242c of the housing 242 and is configured to actuate (or move) the locking pin 244 into the first (extended) position upon reaching the pre-determined activation temperature.

In the illustrated embodiment, the thermally-activated locking mechanism 240 comprises a pair of thermally-activated actuators 246a,b which are provided on opposing sides of a central, longitudinal axis (X-X) of the locking pin 244. However, it shall be appreciated that in other embodiments, a different number of actuators may be provided.

The one or more thermally-activated actuators 246 may be formed of a shape-memory alloy (e.g., a copper-aluminium-nickel alloy or a nickel-titanium alloy), a bi-metallic strip comprising at least two materials having different coefficients of thermal expansion, a liquid crystal elastomer and/or any other suitable material which is able to alter its shape upon reaching a pre-determined activation temperature.

As shown in Figure 5, the pair of thermally-activated actuators 246a,b are anchored between the second end portion 242b of the housing 242 and a corresponding flange 244a provided along the locking pin 244.

It shall be appreciated that the thermally-activated actuators 246a,b may be directly attached to the second end portion 242b and/or the flange 244a or may be indirectly attached to the second end portion 242b and/or the flange 244a using any suitable method of joining or linkage.

The valve apparatus 200 also comprises a heat transfer path which allows the temperature of the fluid(s) travelling across the fluid flow path to be at least partially transferred onto the thermally-activated actuators 246a,b thereby allowing said actuators 246a,b to respond to temperature changes.

In the illustrated embodiment, the heat transfer path is provided via a heat transfer conduit 260 having a first end in thermal communication with the valve inlet 204 and a second end in thermal communication with the thermally-activated locking mechanism 240. However, it shall be appreciated that in other embodiments, other forms of heat transfer path may be envisaged.

The thermally-activated locking mechanism 240 also comprises a biasing member 248 (e.g., a coil spring) which is provided between the second end portion 242b and the flange 244a for biasing the locking pin 244 into the first (extended) position.

Referring now to Figures 6A and 6B, the thermally-activated actuators 246a,b are activated via the temperature of the fluid(s) passing along the fluid flow path and are configured to adopt an elongate configuration (as shown in Figure 6A) upon reaching temperatures at or below the pre-determined activation temperature and are further configured to undergo a shape change and adopt a shortened (or contracted) configuration (as shown in Figure 6B) upon reaching temperatures above the pre-determined activation temperature.

Considering firstly a "normal use" scenario in which the valve member 210 is in the first (open) position and in which cryogenic fuel is passing across the valve housing 202 via the fluid flow path, the cold temperatures of the cyrogenic fuel (typically below -150°c) will be transferred onto the thermally-activated actuators 246a,b via the heat transfer conduit 260 thereby causing said actuators 246a,b to adopt their elongate configuration and hence causing the locking pin 244 to protrude out of the housing 242 and into engagement with one of the corresponding grooves 216a,b when the thermally-activated actuators 246a,b are fully elongated.

As such, during normal use, the thermally-activated locking mechanism 240 is able to inhibit movement of the valve member 210 and thereby prevents the valve member 210 from being accidentally actuated out of the intended (open) valve position, for example due to a user inadvertently applying a turning force onto the valve actuator 220 during routine inspection.

Considering secondly a "routine maintenance" scenario in which the valve member 210 is in the second (closed) position, the thermally-activated locking mechanism 240 also provides the valve apparatus 200 with an additional passive safety feature which automatically inhibits movement of the valve member 210, and thereby prevents the valve member 210 from being accidentally actuated out of the intended (closed) valve position during routine maintenance operations.

Referring now to Figure 6B, it shall be appreciated that during routine maintenance operations, such as inspection, servicing and/or replacement of the pump 104 and/or fuel strainer 110, it is common practice to isolate the particular area of the aircraft fuel delivery system 100 which is being maintained such that no cryogenic fuel is directly upstream or downstream of the component being serviced.

When the system has been properly isolated, there should be no cryogenic fuel present along the inlet 204 of the fluid flow path and hence the inlet 204 will heat up to ambient temperature (which is above the pre-determined activation temperature of the actuators 246a,b).

As the inlet 204 returns back to ambient temperature, heat from said inlet 204 will subsequently be transferred onto the thermally-activated actuators 246a,b via the heat transfer conduit 260 thereby causing said actuators 246a,b to adopt their shortened configuration and hence causing the locking pin 244 to retract back into the housing 242 and out of engagement with the groove 216b.

As such, when the system has been correctly isolated, the valve apparatus 200 allows the user to actuate the valve member 210 as they see fit.

However, in the event that system has not been correctly isolated, meaning that cryogenic fuel is still present within the inlet 204 of the valve apparatus 200, the cold temperatures of the cryogenic fluid will be transferred onto the thermally-activated actuators 246a,b via the heat transfer conduit 260 thereby causing said actuators 246a,b to adopt their elongate configuration and hence causing the locking pin 244 to protrude out of the housing 242 and into engagement with one of the corresponding grooves 216a,b provided in the draft shaft 230.

In such a configuration, movement of the drive shaft 230, and hence the valve member 210, will be inhibited by the locking pin 244 thereby preventing the valve member 210 from being actuated, even if a user tries to operate the valve actuator 220.

It shall also be appreciated that since the thermally-activated locking mechanism 240 is passively actuated and does not feature any complex electrical systems, the aforementioned mechanism can be easily adopted without significantly impacting the cost, reliability and/or maintenance burden of the valve apparatus 200.

Furthermore, in the illustrated embodiment, the thermally-activated locking mechanism 240 also comprises a manually-operated release mechanism 250 for moving the locking pin 244 from the first (extended) position to the second (retracted) position upon actuation via a user.

In the embodiment illustrated in Figures 5, the manually-operated release mechanism is provided in the form of a pull handle which is integrally formed as part of the locking pin 244 and comprises a spherical portion which protrudes outwardly from the housing 242 via an aperture (not shown) provided in the second end portion 242b.

The provision of said pull handle allows a user to manually disengage the locking pin 244 from the valve member 210 via applying an outward translation force onto the locking pin 244 via pulling on the pull-handle 250.

This allows the user to mechanically override and release the locking pin 244 as may be required in scenarios in which rapid actuation of the valve member 210 is required with the thermally-activated actuators 246a,b fully elongated. Furthermore, since the release mechanism 250 can only be released by a conscious and deliberate action by the user, and since a further action must also be subsequently performed (following release of the locking pin 244) in order to actuate the valve member 210, the opportunity for the valve member 210 to be accidentally actuated during routine maintenance operations is inhibited.

Although the valve apparatus above has been described in relation to a ball valve, it shall be appreciated that the valve apparatus is also applicable for use with a butterfly valve or with any other kind of a rotary valve apparatus. Furthermore, the valve apparatus may also be suitable for use with any other suitable valve types, such as a linear motion valve, a pivoting valve, or other like valves.

Furthermore, although the valve apparatus above has been described in relation to an aircraft fuel delivery system, it shall be appreciated that the valve apparatus may also be used in any other suitable aircraft system, such as an aircraft vent system, or in any other suitable systems for the transfer and/or delivery of a cyrogenic fluid, such as an automotive fuel delivery system or a cryogenic fuel storage system. Furthermore, the valve apparatus may also be used in any suitable non-cryogenic tank applications, such as water storage systems and/or gas storage systems, be it on an aircraft or for use in wider non-aerospace applications.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. A valve apparatus for a fluid delivery system comprising:
a valve housing having an inlet and an outlet which together form a fluid flow path across the valve housing;
a valve member configured to move between a first position in which fluid is able to flow along the fluid flow path, and a second position in which the flow of fluid along the fluid flow path is restricted;
a valve actuator operably connected to the valve member, said valve actuator being configured to move the valve member between the first and second positions; and
a thermally-activated locking mechanism in thermal communication with the inlet and configured to inhibit movement of the valve member upon reaching a temperature above or below a pre-determined activation temperature.

2. The valve apparatus according to claim 1, wherein the thermally-activated locking mechanism is configured to inhibit movement of the valve member upon reaching a temperature below the pre-determined activation temperature.

3. The valve apparatus according to claim 2, wherein the thermally-activated locking mechanism is configured to inhibit movement of the valve member upon reaching a temperature below -60°c, optionally below -80°c, and more below -100°c.

4. The valve apparatus according to any preceding claim, wherein the valve actuator is a manually-operated valve actuator.

5. The valve apparatus according to any preceding claim, wherein the valve apparatus further comprises at least one groove formed in the valve member or formed in a drive shaft connected to said valve member, and wherein the thermally-activated locking mechanism comprises:
a locking pin configured to move between a first position in which the locking pin engages with the at least one groove, and a second position in which the locking pin does not engage with the at least one groove; and
a thermally-activated actuator configured to move the locking pin into the first position upon reaching a temperature above or below the pre-determined activation temperature.

6. The valve apparatus according to claim 5, wherein the thermally-activated actuator comprises a shape-memory alloy.

7. The valve apparatus according to claim 5, wherein the thermally-activated actuator comprises a bi-metallic strip comprising at least two materials having different coefficients of thermal expansion.

8. The valve apparatus according to any of claims 5 to 7, wherein the valve comprises a pair of grooves formed in the valve member or formed in a drive shaft connected to said valve member, wherein the first of said grooves is positioned so as to align with the locking pin when the valve member is in the first position, and wherein the second of said grooves is positioned so as to align with the locking pin when the valve member is in the second position.

9. The valve apparatus according to claim 8, wherein the pair of grooves are spaced apart by an angle of approximately 90 degrees about a rotational axis of the valve member.

10. The valve apparatus according to any of claims 5 to 9, wherein the valve apparatus further comprises a biasing member configured to bias the locking pin into the first position.

11. The valve apparatus according to any of claims 5 to 10, wherein the valve apparatus further comprises a manually-operated release mechanism for moving the locking pin from the first position to the second position.

12. The valve apparatus according to any of claims 5 to 11, wherein the valve apparatus further comprises a heat transfer conduit having a first end in thermal communication with the inlet and a second end in thermal communication with the thermally-activated locking mechanism.

13. The valve apparatus according to claim 1, wherein the thermally-activated locking mechanism is configured to inhibit movement of the valve member upon reaching a temperature above the pre-determined activation temperature, and optionally upon reaching a temperature above 100°c.

14. An aircraft fuel delivery system comprising:
a fuel tank for storing cryogenic fuel;
at least one fluid conduit for transferring cryogenic fuel from the fuel tank to one or more aircraft engines; and
at least one valve apparatus according to any of the preceding claims, wherein the valve member of said valve apparatus is positioned along the at least one fluid conduit.

15. An aircraft comprising the aircraft fuel delivery system according to claim 14.
